(19) Europäisches Patentamt / European Patent Office / Office européen des brevets

(11) **EP 2 824 746 A1**

(12) **EUROPEAN PATENT APPLICATION**

(43) Date of publication:
**14.01.2015 Bulletin 2015/03**

(51) Int Cl.:
**H01M 8/18** (2006.01)    **H01M 8/20** (2006.01)

(21) Application number: **14176677.4**

(22) Date of filing: **11.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.07.2013 KR 20130081717**

(71) Applicant: **OCI Company Ltd.**
**Seoul 100-718 (KR)**

(72) Inventors:
• **KIM, Ok-Seon**
**462-807 Gyeonggi-do (KR)**

• **HONG, Min-Ki**
**462-807 Gyeonggi-do (KR)**
• **KIM, Soo-Whan**
**462-807 Gyeonggi-do (KR)**
• **KIM, Byung-Chul**
**462-807 Gyeonggi-do (KR)**

(74) Representative: **Jakobsson, Jeanette Helene**
**Awapatent AB**
**P.O. Box 5117**
**200 71 Malmö (SE)**

(54) **Redox flow battery system and control method for the same**

(57)    Disclosed herein are a redox flow battery system and a control method for the same. In the redox flow battery system, an oxidation number is controlled by injecting at least one of an oxidant and a reducer into at least one of a cathode side and an anode side using a measured oxidation number of the electrolyte. Therefore, even though an oxidation number balance is inevitably broken, since an initial concentration of vanadium ion, that is, an average oxidation number is maintained without a large change in the concentration, efficiency and stability of a battery may be promoted, and the oxidation number balance may be monitored in real time and the oxidation number balance may be recovered without a separate process of separating electrolytes to entirely mixing the electrolytes, or the like, that is, without stopping a function of the battery, thereby facilitating maintenance and control of performance of the battery.

[FIG. 1]

**Description**

BACKGROUND OF THE INVENTION

1. Technical Field

The present invention relates to a redox flow battery system and a control method for the same, and more particularly, to a redox flow battery system capable of maintaining an average oxidation number without a large change in an initial concentration of vanadium ion to thereby promote efficiency and stability of a battery even though an oxidation number balance is inevitably broken, and capable of monitoring the oxidation number balance in real time and recovering the average oxidation number without a separate process of separating electrolytes to entirely mixing the electrolytes, or the like, that is, without stopping a function of the battery to thereby facilitate maintenance and control of performance of the battery, and a control method for the same.

2. Description of the Related Art

Recently, a global effort to decrease greenhouse gas has been made due to environmental contamination and global warming, and as part of the effort, various efforts such as expansion of introduction of new renewable energy, development of an eco-friendly vehicle, development of a power storage system for improving a power demand and supply system have been attempted.

In most of the power supply systems, a thermal power generation is prominent, but in thermal power generation, a large amount of $CO_2$ gas is emitted by using fossil fuel, and an environmental contamination problem due to the emitted CO2 gas is significantly serious. In order to solve this problem, development of a power supply system using eco-friendly energy (wind power, solar energy, tidal power, or the like) has been rapidly increased.

Since most of the new renewable energy uses clean energy generated in the nature, the new renewable energy produces no exhaust gases associated with environmental contamination, which is attractive. However, since the new renewable energy is significantly affected by natural environments, an output variation width depending on time is significantly large, such that there is a limitation in using the new renewable energy.

A power storage technology is an important technology for efficient use of power, improvement of performance or reliability of a power supply system, efficient use energy such as expansion of introduction of new renewable energy, or the like, and development possibility of the power storage technology and a demand for social contribution thereof have been gradually increased. Particularly, expectation for utilization of a secondary battery has been increased in the field as described above.

A redox flow secondary battery has advantage in that it may reversibly change a tank capacity and the number of cell stacks to easily change electric capacity and output and be semi-permanently used, such that the redox flow secondary battery is a most prominent secondary battery for storing large-capacity power to which a high capacity and high efficiency secondary battery should be applied.

The redox flow secondary battery means a battery charged and discharged using an oxidation-reduction reaction of a metal ion of which a valence is changed, and a vanadium redox flow battery using a vanadium ion has been widely studied.

However, V(II), or the like, used in an electrolyte of the vanadium redox flow battery may be sensitive to air to thereby be easily oxidized. In a normal battery operation condition, an average oxidation number balance of a cathode/anode is maintained at $V^{3.5+}$, but in the case in which the electrolyte is oxidized due to generation of oxygen or hydrogen by overcharge, side-reactions such as material degradation, or the like, the oxidation number balance ($V^{3.5+}$) is broken. In this case, charging capacity and discharging capacity may be decreased, such that there is a problem that efficiency of the battery may be decreased.

In order to solve this problem, according to the related art, a method of adding a predetermined amount of vanadium ions to the electrolyte for recovery of the broken balance has been suggested. However, since in the vanadium redox flow battery, generally, efficiency, thermal stability (precipitation production), and the like, are changed according to a concentration of the vanadium ion, a possibility that the method of adding vanadium ions to adjust the balance will cause negative side effects is high.

In addition, in the vanadium redox flow battery, as the vanadium ion may moves between a cathode side and an anode side, such that a capacity face problem is inevitably generated. More specifically, in the vanadium redox flow secondary battery, a cell frame forms an outline of the entire cell, and a central portion of the cell is separated by a membrane, and a cathode and an anode are positioned based on the membrane. That is, in the redox flow battery, an electrolyte at the cathode side and an electrolyte at the anode side are separated by the membrane, and electrolyte movement may be generated by a concentration difference of ions different from each other. This movement may break a balance of an amount of ions between a cathode electrolyte and an anode electrolyte, such that a usage rate of the electrolyte may be deteriorated, thereby causing a decrease in usable battery capacity.

In the redox flow battery, it is impossible to prevent this capacity fade phenomenon as long as a porous membrane is used. In order to electrically form a circuit in the battery, since ions may move between the cathode and the anode, the porous membrane should be used, such that a capacity fade problem due to movement of undesired ions may be necessarily generated.

Currently, there is no membrane capable of exchanging proton but not vanadium ion with a selectivity of 100%. Therefore, since it is impossible to prevent exchange of the vanadium ion, a technology of recovering the battery to the original state is necessarily required.

In the case of the vanadium redox flow battery, there is a method of allowing the same mole number of the vanadium ion to be present at both sides by totally mixing the cathode electrolyte and the anode electrolyte with each other to thereby recovery charging and discharging capacity. This method is referred to as a total mixing method.

However, in this case, there are disadvantages in that a loss of pump energy required to mixing the entire cathode electrolyte and anode electrolyte is large, and a lot of time is consumed, and energy of a vanadium electrolyte in a precharged state may be completely lost.

Therefore, research into a technology for solving this problem has been urgently demanded.

SUMMARY OF THE INVENTION

The present invention has been made in an effort to provide a redox flow battery system capable of maintaining an average oxidation number without a large change in an initial concentration of vanadium ion to thereby promote efficiency and stability of a battery even though an oxidation number balance is inevitably broken, and a control method for the same.

In addition, the present invention has been made in an effort to provide a redox flow battery system capable of monitoring an oxidation number balance in real time and recovering the average oxidation number without a separate process of separating electrolytes to entirely mixing the electrolytes, or the like, that is, without stopping a function of the battery to thereby facilitate maintenance and control of performance of the battery, and a control method for the same.

Further, the present invention has been made in an effort to provide a redox flow battery system capable of recovering an oxidation number balance by directly injecting a relatively cheap oxidant or reducer into an electrolyte without adding expensive vanadium ion to thereby have an economical advantage, and a control method for the same.

Furthermore, the present invention has been made in an effort to provide a redox flow battery system capable of maintaining an oxidation number balance and solving a capacity fade problem due to a crossover phenomenon of ions by simultaneously performing a partial transfer function, and a control method for the same.

According to an exemplary embodiment of the present invention, there is provided a redox flow battery system for controlling an oxidation number, the redox flow battery system configured to inject at least one of an oxidant and a reducer into at least one electrolyte of a cathode electrolyte and an anode electrolyte, based on a measured oxidation number of the at least one electrolyte.

According to another exemplary embodiment of the present invention, there is provided a redox flow battery system comprising: a sensing device configured to measure a physical state of at least one electrolyte of an cathode electrolyte and an anode electrolyte; a controller configured to determine an injection amount and injection timing of at least one of a reducer and oxidant into the at least one electrolyte, based on the measured physical state of the at least one electrolyte; and an oxidation number balancer configured to inject the at least one of the reducer and the oxidant into the cathode electrolyte and the anode electrolyte, according to a signal from the controller.

The oxidant is at least one of air and oxygen, and the reducer is at least one of hydrazine hydrate, hydrazine sulfate, ascorbic acid, oxalic acid, a hydrate ascorbic acid, a hydrate oxalic acid, and a salt thereof. In the case in which the measured oxidation number satisfies $|X-3.5| > 1.0$, where X is the measured oxidation number, the oxidation number is adjusted, and a partial transfer function may be performed using information on at least one of the concentration, the volume, and the state of charge of the electrolyte. The redox flow battery system is configured to periodically inject the at least one of the oxidant and the reducer into the at least one of the cathode electrolyte and the anode electrolyte, at a predetermined time cycle.

According to another exemplary embodiment of the present invention, there is provided a control method for a redox flow battery system, the control method comprising: measuring at least one state of a cathode electrolyte and an anode electrolyte; determining an injection amount and an injection timing of at least one of a reducer and the oxidant into at least one electrolyte of the cathode electrolyte and the anode electrolyte, according to the at least measured state; and injecting the determined injection amount of the at least one of the reducer and the oxidant at the determined injection timing into the at least one electrolyte.

The control method for a redox flow battery system may further include re-measuring the at least one state of the cathode electrolyte and the anode electrolyte, and the states of the electrolytes include information on at least one of an oxidation number, a concentration, a volume, and a state of charge, of the electrolytes. In the determining of the injection timing, in the case in which the measured oxidation number satisfies $|X-3.5| > Y$, where $X$ is the measured oxidation number, and $Y$ is a predetermined level, at least one of the oxidant and the reducer is injected. In addition, the control method for a redox flow battery system may further include performing a partial transfer function, using the information on the at least one of the concentration, the volume, and the state of charge, of the electrolytes. Here, the predetermined level may be 1.0, preferably, 0.05 to 0.3.

According to another exemplary embodiment of the present invention, there is provided a control method for a redox flow battery system, the control method comprising: measuring oxidation numbers of electrolytes of a cathode side and an anode side; determining whether or not a difference between one of the measured oxidation numbers and a preset oxidation number is greater than a predetermined level; and

injecting at least one of an oxidant and a reducer into the corresponding electrolyte when the difference is greater than the predetermined level.

Therefore, even though an oxidation number balance is inevitably broken, since an initial concentration of vanadium ion, that is, an average oxidation number is maintained without a large change in the concentration, efficiency and stability of a battery may be promoted, and the oxidation number balance may be monitored in real time and the oxidation number balance may be recovered without a separate process of separating electrolytes to entirely mixing the electrolytes, or the like, that is, without stopping a function of the battery, thereby facilitating maintenance and control of performance of the battery.

BRIEF DESCRIPTION OF THE DRAWINGS

The above and other objects, features and advantages of the present invention will be more clearly understood from the following detailed description taken in conjunction with the accompanying drawings, in which:

FIG. 1 is a configuration diagram of a redox flow battery system according to an exemplary embodiment of the present invention.
FIG. 2 is a flow chart showing a control method according to the present invention.
FIG. 3 is a flow chart describing a control process of determining an amount of an electrolyte to be partially transferred.
FIG. 4 is a flow chart showing a control method to which a partial transfer function is applied in the present invention.

DESCRIPTION OF THE PREFERRED EMBODIMENTS

Hereinafter, the present invention will be described in detail.

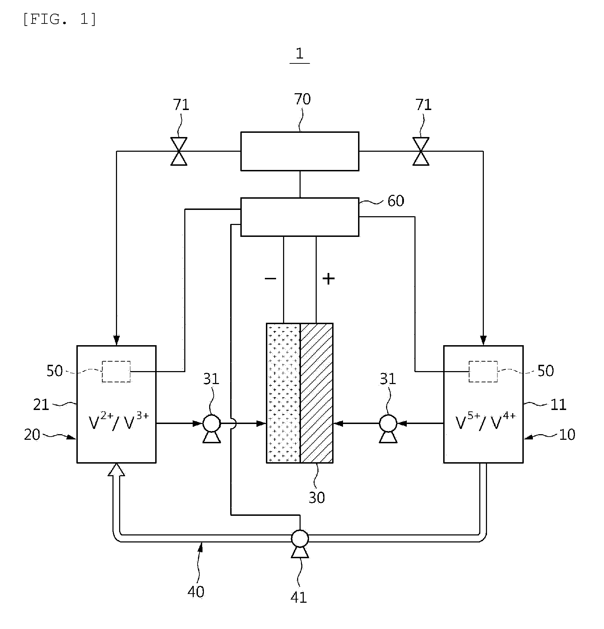

FIG. 1 is a configuration diagram of a redox flow battery system according to the present invention.

As shown in FIG. 1, a redox flow battery 1 according to the present invention is configured to include a cathode side 10, an anode side 20, a membrane 30, a partial transfer device 40, a sensing device 50, a controller 60, and an oxidation number balancer 70.

First, an entire description for the redox flow battery will be provided. An electrolyte received in a tank 11 of the cathode side 10 and an electrolyte received in a tank 21 of the anode side 20 configure a circuit while exchanging ions by a pump 31 through the membrane 30 to thereby serve as a battery. Since the principle of the redox flow battery is known in the art, a detailed description thereof will be omitted.

In this case, as described above, necessarily, undesired ions pass through the membrane 30, which cause a capacity fade problem, and vanadium ions ($V^{2+}$, $V^{3+}$) used in the electrolyte of a vanadium redox flow battery are sensitive to air to thereby be easily oxidized, thereby causing a problem that an oxidation number balance is broken.

In this case, the sensing device 50 is used in order to measure state of at least one of the electrolyte of the cathode side and the anode side. This sensing device 50 may measure oxidation numbers of the cathode side 10 and the anode side 20 in real time. In addition, the measured state of the electrolyte may be a state of charge (SOC), a concentration, a volume, or the like.

Further, the sensing device 50 is connected to the controller 60, such that the measured state of the electrolyte is transferred thereto. For example, an open circuit voltage (OCV) is measured, thereby making it possible to obtain the concentration, the oxidation number, the volume, the state of charge, or the like. In more detail, the volume and OCV are measured, and thus, the concentration, a vanadium ion ratio, and the state of charge may be calculated from the measured volume and OCV. That is, the function of detecting various states of the electrolyte by indirectly calculating the state of the electrolyte through the connected controller 60, calculating the oxidation number or and an amount of the electrolyte to be partially transferred through a data base, or the like, is also included in the present invention as well as the function of detecting the state of the electrolyte directly measured by the sensing device 50.

In the vanadium redox flow battery, a theoretical average oxidation number of vanadium ions is +3.5. In detail, in the vanadium redox flow battery, an oxide at the cathode side 10 is $V^{5+}$, and a reduced product is $V^{4+}$, but an oxide at the anode side 20 is $V^{3+}$, and a reduced product is $V^{2+}$. That is, when the state of charge (SOC) is increased, $V^{5+}$ is

increased in the cathodeside tank 11, and $V^{2+}$ is increased in the anode-side tank 12. As a result, theoretically, the oxidation number of vanadium always becomes +3.5.

In the case in which the average oxidation number of vanadium ion at the entire cathode side 10 and anode side 20 is out of a predetermined range from +3.5 corresponding to an oxidation number in an equilibrium state, an amount of an oxidant or reducer to be injected is calculated by calculation of the controller 60, and the automatically or manually calculated amount of the oxidant or reducer is injected into the electrolyte, thereby re-adjusting the average oxidation number to be in the equilibrium state.

Here, the oxidant may be air or oxygen, and the reducer may be at least one of hydrazine hydrate, hydrazine sulfate, ascorbic acid, oxalic acid, a hydrate ascorbic acid, a hydrate oxalic acid, and a salt thereof. Here, simple examples of the oxidant are described, but the oxidant is not limited thereto.

That is, since a relatively cheap oxidant or reducer is used, the present invention may have an economical advantage and has an advantage in that a concentration of the vanadium ion at an initial operation state may be maintained. An injection timing of the oxidant or reducer may be calculated by the controller 60 as described above, but the redox flow battery system may be controlled so that the oxidant or reducer is regularly injected at a predetermined time cycle based on long term experimental data.

In addition, since the redox flow battery system is a system in which the oxidant or reducer is directly injected into the electrolyte in operation, a process of separating only the electrolyte to separately processing the electrolyte is not required, such that it may be easy to maintain and manage performance of the battery.

In addition, when the oxidation number balancer 70 and the partial transfer device 40 are connected, a balance of an amount (mole number) of vanadium between the cathode and the anode as well as the oxidation number balance may be adjusted. Here, the oxidation number balancer 70 may adjust injection of the oxidant and the reducer through a valve 71, and the partial transfer device 40 generally includes an exclusive pump 41.

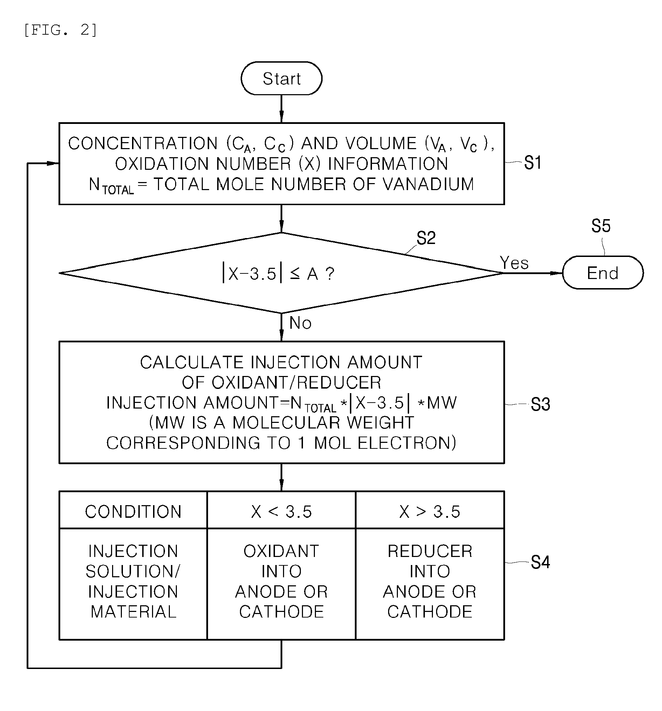

FIG. 2 is a flow chart showing a control method according to the present invention.

First, the controller receives information on a concentration $C_C$ and a volume $V_C$ of the cathode, a concentration $C_A$ and a volume $V_A$ of the anode, a current average oxidation number X of the electrolyte, or the like, from the sensing device, calculates them therein, or use preset values (S1).

Then, in the case in which it is judged that an oxidation number range does not satisfy the desired condition ($|X-3.5| < A$) (S2), the oxidant or reducer is injected into the electrolyte by the oxidation number balancer (S3), but in the case in which the oxidation number range satisfies the desired condition, a control process is ended (S5). Here, a critical value A may be 1.0, preferably, 0.05 to 0.3.

The controller determines an injection amount of the oxidant or reducer using the information obtained in S1 to inject the determined amount of the oxidant or reducer to the cathode or anode and allow the injected oxidant or reducer to suitably react with the electrolyte in the battery. The injection amount is calculated according to the following Equation 1.

$$\text{Injection amount (g)} = N_{TOTAL} * |X-3.5| * MW \quad (\text{Equation 1})$$

Here, MW is a value obtained by dividing the number of electrons emitted per molecule into a molecular weight of the oxidant/reducer, and $N_{TOTAL}$ is a total mole number of ions in the cathode and anode electrolytes.

In the case in which X is less than 3.5 (X<3.5), the oxidation number is increased by injecting the oxidant to the anode or cathode, and in the case in which X is more than 3.5 (X>3.5), the oxidation number is decreased by injecting the reducer to the anode or cathode (S4). This process is repeated until Equation 1 is satisfied (FIG. 2).

As described above, in the present invention, the partial transfer function may also be performed. First, movement of the electrolyte in the partial transfer function will be described, and the control method using the partial transfer function according to will be described.

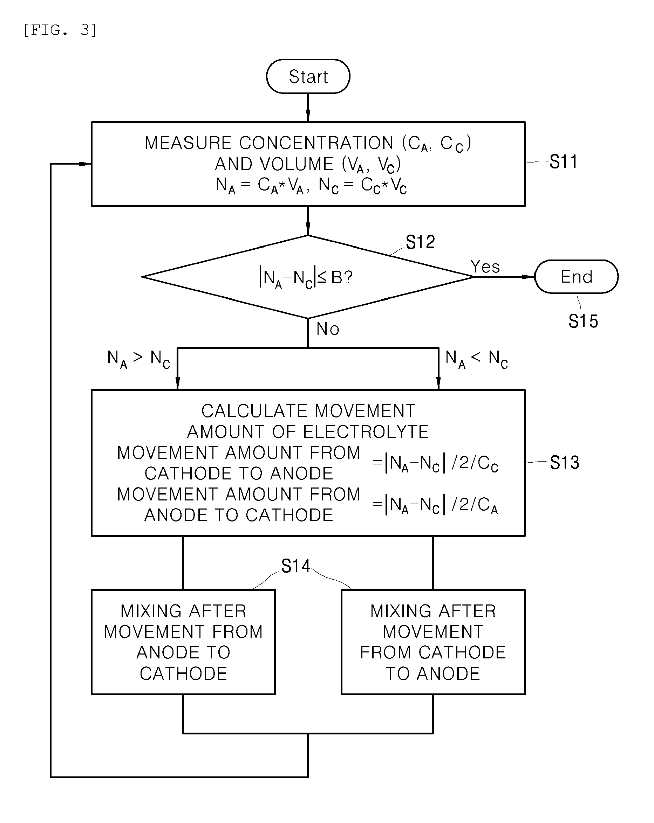

FIG. 3 is a flow chart describing a control process of determining an amount of an electrolyte to be partially transferred.

First, the controller receives information on a concentration $C_C$ and a volume $V_C$ of the cathode, a concentration $C_A$ and a volume $V_A$ of the anode from the sensing device or uses the preset values thereof to calculate mole numbers of vanadium of the cathode and anode electrolytes according to the following Equations 2 and 3.

$$N_A = C_A * V_A \quad\quad\quad\quad\quad (\text{Equation 2})$$

$$N_C = C_C * V_C \quad\quad\quad\quad\quad (\text{Equation 3})$$

Next, when a difference in the mole number of vanadium between the cathode and anode is compared with a predetermined value B, in the case in which the difference is more than B, the partial transfer function is performed (S13), and in the case in which the difference is equal to or less than B, the control process is ended (S15). Here, the predetermined value B may be $N_{TOTAL}$ * 10%, preferably, be in a range of $N_{TOTAL}$*0.5% ~ $N_{TOTAL}$*2.5%.

Then, a movement amount of the electrolyte transferred from the cathode to the anode and a movement amount of the electrode transferred from the anode to the cathode are calculated (S13) according to the following Equations 4 and 5.

$$\text{Amount of electrode to be transferred from cathode to anode} = |N_A - N_C| * C_C / 2 \qquad \text{(Equation 4)}$$

$$\text{Amount of electrode to be transferred from anode to cathode} = |N_A - N_C| * C_A / 2 \qquad \text{(Equation 5)}$$

The partial transfer function is performed based on the calculated movement amount (S14). Thereafter, until the condition in S12 is satisfied, the above-mentioned processes (S11 to S14) are repeated.

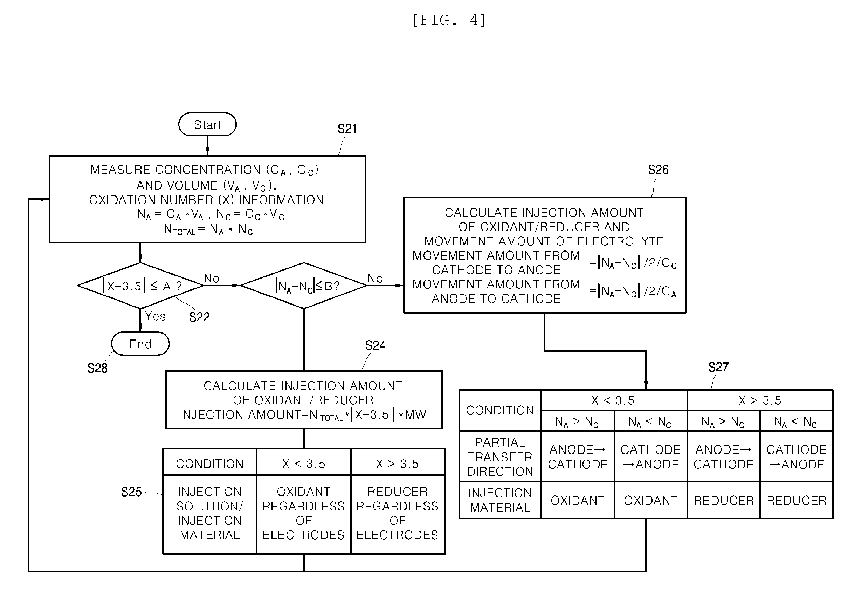

FIG. 4 is a flow chart showing a control method to which the partial transfer function is applied in the present invention. In the case in which a capacity fade due to crossover of the oxidation number and the vanadium ion is out of a predetermined range, the oxidant/reducer is injected or the partial transfer function is performed, which will be described in detail.

First, the controller receives information on a concentration $C_C$ and a volume $V_C$ of the cathode, a concentration $C_A$ and a volume $V_A$ of the anode, and an average oxidation number from the sensing device and calculates the total mole number according to the following Equation 6 (S21).

$$N_{TOTAL} = N_A + N_C \qquad \text{(Equation 6)}$$

Then, in the case in which it is judged that an oxidation number range does not satisfy the desired condition ($|X-3.5| \leq A$) (S22), the oxidant or reducer is injected into the electrolyte by the oxidation number balancer, or the partial transfer function is performed, but in the case in which the oxidation number range satisfies the desired condition, a control process is ended (S28).

Next, when a difference in the mole number of vanadium between the cathode and anode electrolytes is compared with a predetermined value B (S23), in the case in which the difference is more than B, the partial transfer function is performed (S26), and in the case in which the difference is equal to or less than B, the oxidant/reducer is injected to thereby adjust the oxidation number balance (S24 and S25). First, a process of adjusting the oxidation number balance will be described. As described above, in the case in which X is less than 3.5 (X<3.5), the oxidation number is increased by injecting the oxidant into the anode or cathode, and in the case in which X is more than 3.5 (X>3.5), the oxidation number is decreased by injecting the reducer into the anode or cathode (S25).

Here, the predetermined value B may be $N_{TOTAL}$ * 10%, preferably, $N_{TOTAL}$*0.5% ~ $N_{TOTAL}$*2.5%.

Next, the partial transfer function will be described. As described above, the movement amount of the electrolyte is calculated according to Equations 4 and 5, and a total injection amount of the oxidant/reducer may be calculated according to the following Equation 7.

$$\text{Injection amount of oxidant/reducer} = N_{TOTAL} * |X-3.5| * MW \qquad \text{(Equation 7)}$$

Therefore, an injected material and a partial transfer direction is determined through comparison with an equilibrium value (3.5) of the oxidation number and comparison of the molar numbers of vanadium between the cathode and anode, which is summarized in Table 1 (S27).

[Table 1]

| Condition | X < 3.5 | | X > 3.5 | |
|---|---|---|---|---|
| | $N_A > N_C$ | $N_A < N_C$ | $N_A > N_C$ | $N_A < N_C$ |
| Partial Transfer Direction | Anode -> Cathode | Cathode -> Anode | Anode -> Cathode | Cathode -> Anode |
| Injection material | Oxidant | Oxidant | Reducer | Reducer |

In addition, it is preferable that the redox flow battery system operates at a condition at which heat of reaction between vanadium ion and the oxidant/reducer is minimized. In order to minimize an influence of the remaining oxidant/reducer, it is preferable that a mole number of the oxidant/reducer to be injected is less than or equal to a mole number of vanadium ions to be reduced.

According to the present invention, even though the oxidation number balance is inevitably broken, since the average oxidation number ($V^{3.5+}$) is maintained without a change in the initial concentration of the vanadium ion, efficiency and stability of the battery is maintained.

In addition, the oxidation number balance is monitored in real time and an equilibrium of the oxidation number may be recovered without a separate process of separating the electrolytes to entirely mixing the electrolytes, that is, without stopping the function of the battery, such that maintenance and management of performance of the battery may be facilitated.

Further, since the oxidation number balance may be recovered by directly injecting the relatively cheap oxidant or the reducer into the electrolyte without adding expensive vanadium ion, the redox flow battery system according to the present invention has an economical advantage.

Furthermore, since the partial transfer function may be simultaneously performed, the capacity fade problem due to the crossover phenomenon of the ions may be solved simultaneously with maintaining the oxidation number balance.

Hereinabove, although the present invention is described by specific matters such as concrete components, and the like, exemplary embodiments, and drawings, they are provided only for assisting in the entire understanding of the present invention. In addition, the present invention is not limited to the exemplary embodiments, but various modifications and changes may be made by those skilled in the art to which the present invention pertains from this description. Therefore, the spirit of the present invention should not be limited to the above-described exemplary embodiments, and the following claims as well as all modified equally or equivalently to the claims are intended to fall within the scopes and spirits of the invention.

**Claims**

1. A redox flow battery system for controlling an oxidation number, the redox flow battery system configured to inject at least one of an oxidant and a reducer into at least one electrolyte of a cathode electrolyte and an anode electrolyte, based on a measured oxidation number of the at least one electrolyte.

2. The redox flow battery system of claim 1, wherein the oxidant is at least one of air and oxygen.

3. The redox flow battery system of claim 1, wherein the reducer is at least one of hydrazine hydrate, hydrazine sulfate, ascorbic acid, oxalic acid, a hydrate ascorbic acid, a hydrate oxalic acid, and a salt thereof.

4. The redox flow battery system of claim 1, wherein the redox flow battery system is configured to adjust the oxidation number when the measured oxidation number satisfies Equation 1:

$$|X-3.5| > 1.0,$$

where X is the measured oxidation number.

5. The redox flow battery system of claim 1, wherein the redox flow battery system is configured to adjust the oxidation number when the measured oxidation number satisfies Equation 2:

$$|X-3.5| > 0.3 \text{ or } |X-3.5| < 0.05,$$

where X is the measured oxidation number.

6. The redox flow battery system of claim 1, wherein the redox flow battery system is configured to perform a partial transfer function, based on electrolyte information,
wherein the electrolyte information includes at least one of a concentration, a volume and a state of charge of the at least one electrolyte.

7. The redox flow battery system of claim 1, wherein the redox flow battery system is configured to periodically inject the at least one of the oxidant and the reducer into the at least one of the cathode electrolyte and the anode electrolyte, at a predetermined time cycle.

8. A redox flow battery system, comprising:

a sensing device configured to measure a physical state of at least one electrolyte of an cathode electrolyte and an anode electrolyte;
a controller configured to determine an injection amount and injection timing of at least one of a reducer and oxidant into the at least one electrolyte, based on the measured physical state of the at least one electrolyte; and
an oxidation number balancer configured to inject the at least one of the reducer and the oxidant into the cathode electrolyte and the anode electrolyte, according to a signal from the controller.

9. The redox flow battery system of claim 8, wherein the sensing device is configured to measure, as the physical state, at least one of an oxidation number, a concentration, a volume, and a state of charge, of the at least one electrolyte.

10. The redox flow battery system of claim 8, wherein the sensing device is configured to measure, as the physical state, an oxidation number of the at least one of the cathode electrolyte and the anode electrolyte, and
wherein the controller is configured to operate the oxidation number balancer when the measured oxidation number satisfies Equation 3:

$$|X-3.5| > Y,$$

where X is the measured oxidation number, and Y is a predetermined level.

11. The redox flow battery system of claim 9, further comprising
a partial transfer device configured to perform a partial transfer function, according to the signal from the controller,
wherein the controller is configured to provide the signal to the partial transfer device, based on information on the at least one of the concentration, the volume and the state of charge of the electrolytes.

12. The redox flow battery system of claim 8, wherein the oxidant is at least one of air and oxygen.

13. The redox flow battery system of claim 8, wherein the reducer is at least one of hydrazine hydrate, hydrazine sulfate, ascorbic acid, oxalic acid, a hydrate ascorbic acid, a hydrate oxalic acid, and a salt thereof.

14. The redox flow battery system of claim 8, wherein the oxidation number balancer is configured to periodically inject the at least one of the reducer and the oxidant into at least one of the cathode electrolyte and the anode electrolyte, at a predetermined time cycle.

15. A control method of a redox flow battery system, the control method comprising:

measuring at least one state of a cathode electrolyte and an anode electrolyte;
determining an injection amount and an injection timing of at least one of a reducer and the oxidant into at least one electrolyte of the cathode electrolyte and the anode electrolyte, according to the at least measured state; and
injecting the determined injection amount of the at least one of the reducer and the oxidant at the determined injection timing into the at least one electrolyte.

[FIG. 1]

[FIG. 2]

Start

CONCENTRATION ($C_A$, $C_C$) AND VOLUME ($V_A$, $V_C$), OXIDATION NUMBER (X) INFORMATION $N_{TOTAL}$ = TOTAL MOLE NUMBER OF VANADIUM ——S1

$|X-3.5| \leq A$ ? ——S2

S5

Yes → End

No

CALCULATE INJECTION AMOUNT OF OXIDANT/REDUCER INJECTION AMOUNT=$N_{TOTAL} * |X-3.5| * MW$ (MW IS A MOLECULAR WEIGHT CORRESPONDING TO 1 MOL ELECTRON) ——S3

| CONDITION | X < 3.5 | X > 3.5 |
|---|---|---|
| INJECTION SOLUTION/ INJECTION MATERIAL | OXIDANT INTO ANODE OR CATHODE | REDUCER INTO ANODE OR CATHODE |

——S4

[FIG. 3]

Start

MEASURE CONCENTRATION $(C_A, C_C)$
AND VOLUME $(V_A, V_C)$
$N_A = C_A * V_A$, $N_C = C_C * V_C$ — S11

$|N_A - N_C| \leq B$? — S12

Yes → End
S15

No

$N_A > N_C$ | $N_A < N_C$

CALCULATE MOVEMENT
AMOUNT OF ELECTROLYTE
MOVEMENT AMOUNT FROM
CATHODE TO ANODE $= |N_A - N_C| / 2 / C_C$ — S13
MOVEMENT AMOUNT FROM
ANODE TO CATHODE $= |N_A - N_C| / 2 / C_A$

S14

MIXING AFTER
MOVEMENT FROM
ANODE TO
CATHODE

MIXING AFTER
MOVEMENT
FROM CATHODE
TO ANODE

[FIG. 4]

EP 2 824 746 A1

```
                    ( Start )
                        |                              S21
                        v
    ┌─────────────────────────────────────────┐
    │  MEASURE CONCENTRATION (C_A, C_C)         │
    │          AND VOLUME (V_A, V_C),           │
    │     OXIDATION NUMBER (X) INFORMATION       │
    │     N_A = C_A * V_A ,  N_C = C_C * V_C     │
    │           N_TOTAL = N_A * N_C              │
    └─────────────────────────────────────────┘
```

$N_A = C_A * V_A$, $N_C = C_C * V_C$

$N_{TOTAL} = N_A * N_C$

S22: $|X-3.5| \leq A$ ?   No →   $|N_A-N_C| \leq B$ ?   No →

Yes → End (S28)

**S26 — CALCULATE INJECTION AMOUNT OF OXIDANT/REDUCER AND MOVEMENT AMOUNT OF ELECTROLYTE**

MOVEMENT AMOUNT FROM CATHODE TO ANODE $= |N_A-N_C| / 2 / C_C$

MOVEMENT AMOUNT FROM ANODE TO CATHODE $= |N_A-N_C| / 2 / C_A$

**S24 — CALCULATE INJECTION AMOUNT OF OXIDANT/REDUCER**

INJECTION AMOUNT $= N_{TOTAL} * |X-3.5| * MW$

S25:

| CONDITION | X < 3.5 | X > 3.5 |
|---|---|---|
| INJECTION SOLUTION/ INJECTION MATERIAL | OXIDANT REGARDLESS OF ELECTRODES | REDUCER REGARDLESS OF ELECTRODES |

S27:

| CONDITION | X < 3.5 | | X > 3.5 | |
|---|---|---|---|---|
| | $N_A > N_C$ | $N_A < N_C$ | $N_A > N_C$ | $N_A < N_C$ |
| PARTIAL TRANSFER DIRECTION | ANODE→CATHODE | CATHODE→ANODE | ANODE→CATHODE | CATHODE→ANODE |
| INJECTION MATERIAL | OXIDANT | OXIDANT | REDUCER | REDUCER |

# EP 2 824 746 A1

| | Europäisches Patentamt European Patent Office Office européen des brevets | **EUROPEAN SEARCH REPORT** | Application Number EP 14 17 6677 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2014/178874 A1 (UNITED TECHNOLOGIES CORP [US]) 6 November 2014 (2014-11-06)<br><br>* claims 1-20 *<br>----- | 1-3,6,8,<br>9,11-13,<br>15 | INV.<br>H01M8/18<br>H01M8/20 |
| X | WO 2012/135473 A2 (ENERVAULT CORP [US]; CHANG ON KOK [US]; SOPCHAK DAVID ANDREW [US]; PHA) 4 October 2012 (2012-10-04)<br>* paragraph [0058] *<br>* paragraph [0069] - paragraph [0091] *<br>----- | 1,3,6-9,<br>11,13-15 | |
| Y | WO 02/15317 A1 (SQUIRREL HOLDINGS LTD [GB]; PELLEGRI ALBERTO [IT]; BROMAN BARRY MICHAE) 21 February 2002 (2002-02-21)<br>* page 19 *<br>----- | 1-15 | |
| Y | WO 96/35239 A1 (UNISEARCH LTD [AU]; KAZACOS MICHAEL [AU]; KAZACOS MARIA SKYLLAS [AU]) 7 November 1996 (1996-11-07)<br>* page 96, line 20 - page 98, line 30 *<br>* page 102, line 1 - page 103, line 15 *<br>* page 116 *<br>----- | 1-15 | |
| | | | TECHNICAL FIELDS SEARCHED (IPC)<br><br>H01M |

The present search report has been drawn up for all claims

| Place of search | Date of completion of the search | Examiner |
|---|---|---|
| Munich | 28 November 2014 | Wiedemann, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 17 6677

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2014

| Patent document cited in search report | | Publication date | Patent family member(s) | | Publication date |
|---|---|---|---|---|---|
| WO 2014178874 | A1 | 06-11-2014 | NONE | | |
| WO 2012135473 | A2 | 04-10-2012 | AU | 2012236451 A1 | 31-10-2013 |
| | | | CN | 103534858 A | 22-01-2014 |
| | | | EP | 2692010 A2 | 05-02-2014 |
| | | | JP | 2014514704 A | 19-06-2014 |
| | | | KR | 20140016918 A | 10-02-2014 |
| | | | US | 2013084506 A1 | 04-04-2013 |
| | | | WO | 2012135473 A2 | 04-10-2012 |
| WO 0215317 | A1 | 21-02-2002 | AU | 6724900 A | 25-02-2002 |
| | | | BR | 0017317 A | 15-07-2003 |
| | | | CA | 2420014 A1 | 21-02-2002 |
| | | | CN | 1502141 A | 02-06-2004 |
| | | | EP | 1310008 A1 | 14-05-2003 |
| | | | JP | 2004519814 A | 02-07-2004 |
| | | | KR | 20030034146 A | 01-05-2003 |
| | | | MX | PA03001330 A | 13-12-2004 |
| | | | NZ | 523752 A | 28-10-2005 |
| | | | TR | 200300178 T2 | 22-01-2007 |
| | | | TW | 531934 B | 11-05-2003 |
| | | | WO | 0215317 A1 | 21-02-2002 |
| WO 9635239 | A1 | 07-11-1996 | AT | 251806 T | 15-10-2003 |
| | | | CA | 2220075 A1 | 07-11-1996 |
| | | | DE | 69630298 D1 | 13-11-2003 |
| | | | DE | 69630298 T2 | 02-09-2004 |
| | | | EP | 0829104 A1 | 18-03-1998 |
| | | | ES | 2210360 T3 | 01-07-2004 |
| | | | HK | 1009561 A1 | 02-07-2004 |
| | | | NZ | 306364 A | 29-04-1999 |
| | | | US | 2001028977 A1 | 11-10-2001 |
| | | | US | 2003143456 A1 | 31-07-2003 |
| | | | WO | 9635239 A1 | 07-11-1996 |

EPO FORM P0459

For more details about this annex : see Official Journal of the European Patent Office, No. 12/82